# EUROPEAN PATENT APPLICATION

(11) **EP 3 730 369 A1**
(43) Date of publication of application: **28.10.2020**
(21) Application number: 19171065.6
(22) Date of filing: 25.04.2019
(51) Int. Cl.: B60W 30/18, G06N 3/04, B60W 30/095, B60W 50/00

(54) **SELECTING A MOTION ACTION FOR AN AUTOMATED VEHICLE CONSIDERING A VARIABLE NUMBER OF OTHER ROAD USERS**

(71) Applicant: Bayerische Motoren Werke Aktiengesellschaft, 80809 München (DE)
(72) Inventor: Mirchevska, Branka, 81643 München (DE); Hügle, Maria, 79098 Freiburg (DE); Werling, Moritz, 80809 München (DE); Bödecker, Joschka, 79108 Freiburg (DE); Kalweit, Gabriel, 79115 Freiburg (DE)

(57) **Abstract**

An aspect of the invention describes Artificial intelligence unit for an automated vehicle, with said artificial intelligence unit comprising a pooling unit, configured to transform input states of a variable number of other road users in the environment of the automated vehicle into one output state, a knowledge configuration, said artificial intelligence unit configured to determine an evaluation value for at least two motion actions for the automated vehicle considering the output state and considering the knowledge configuration, select one of the motion actions considering the evaluation value of the respective motion actions.

## Description

This invention relates to an artificial intelligence unit for selecting a motion action for an automated vehicle and to a system for training said artificial intelligence unit.

An automated vehicle is a vehicle with automated longitudinal guidance and/or automated lateral guidance. The term "automated vehicle" also comprises an autonomous vehicle. The term "automated vehicle" comprises in particular a vehicle with an arbitrary level of automation, for example the levels of automation that are defined in the standard SAE J3016 (SAE - Society of Automotive Engineering):
Level 0: Automated system issues warnings and may momentarily intervene but has no sustained vehicle control.
Level 1 ("hands on"): The driver and the automated system share control of the vehicle. Examples are Adaptive Cruise Control (ACC), where the driver controls steering and the automated system controls speed; and Parking Assistance, where steering is automated while speed is under manual control. The driver must be ready to retake full control at any time. Lane Keeping Assistance (LKA) Type II is a further example of level 1 self-driving.
Level 2 ("hands off'): The automated system takes full control of the vehicle (accelerating, braking, and steering). The driver must monitor the driving and be prepared to intervene immediately at any time if the automated system fails to respond properly. The shorthand "hands off' is not meant to be taken literally. In fact, contact between hand and wheel is often mandatory during SAE 2 driving, to confirm that the driver is ready to intervene.
Level 3 ("eyes off'): The driver can safely turn their attention away from the driving tasks, e.g. the driver can text or watch a movie. The vehicle will handle situations that call for an immediate response, like emergency braking. The driver must still be prepared to intervene within some limited time, specified by the manufacturer, when called upon by the vehicle to do so.
Level 4 ("mind off'): As level 3, but no driver attention is ever required for safety, i.e. the driver may safely go to sleep or leave the driver's seat. Self-driving is supported only in limited spatial areas (geofenced) or under special circumstances, like traffic jams. Outside of these areas or circumstances, the vehicle must be able to safely abort the trip, i.e. park the car, if the driver does not retake control.
Level 5 ("steering wheel optional"): No human intervention is required at all. An example would be a robotic taxi.

Apart from automated vehicles, it is known that artificial intelligence unit, e.g. artificial neural networks, rely on fixed size inputs, e.g. occupancy grids.

However, fixed size inputs impose a trade-off between computational workload and expressiveness. Whilst smaller architectures acting on low-resolution grids as an input are efficient from a computational perspective, they may be too imprecise to represent the environment correctly. On the other hand, for high-resolution grids, most computations can be potentially redundant due to the sparsity of grid maps. In addition, a grid is limited to its initial size.

Therefore, the purpose of the invention is to provide an artificial intelligence unit, which does not impose a trade-off between computational workload and expressiveness.

One aspect of the invention describes an artificial intelligence unit for an automated vehicle
One example for the artificial intelligence unit is a reinforcement learning unit.

Basic reinforcement is modeled as a Markov decision process:
- a set of environment and agent states;
- a set of actions, of the agent;
- probabilities of transition from one state to another state,
- a reward after transition from one state to another by a specific action, and
- rules that describe what the agent observes.

Rules are often stochastic. The observation typically involves the scalar, immediate reward associated with the last transition. In many works, the agent is assumed to observe the current environmental state (full observability). If not, the agent has partial observability. Sometimes the set of actions available to the agent is restricted (a zero balance cannot be reduced).

A reinforcement learning agent interacts with its environment in discrete time steps. At each time step, the agent receives an observation, which typically includes the reward. It then chooses an action from the set of available actions, which is subsequently sent to the environment. The environment moves to a new state and the reward associated with the transition is determined. The goal of a reinforcement learning agent is to collect as much reward as possible. The agent can (possibly randomly) choose any action as a function of the history.

Another example for the artificial intelligence unit is a Q-learning unit.

Q-learning is a reinforcement learning technique. The goal of Q-Learning is to learn a policy, which tells an agent what action to take under what circumstances. It does not require a model of the environment and can handle problems with stochastic transitions and rewards, without requiring adaptations.

For any finite Markov decision process, Q-learning finds a policy that is optimal in the sense that it maximizes the expected value of the total reward over all successive steps, starting from the current state. Q-learning can identify an optimal action-selection policy for any given finite Markov decision process, given infinite exploration time and a partly-random policy. "Q" names the function that returns the reward used to provide the reinforcement and can be said to stand for the "quality" of an action taken in a given state.

Another example for the artificial intelligence unit is a Deep Q-learning unit.

Deep Q-learning uses a deep convolutional neural network, with layers of tiled convolutional filters to mimic the effects of receptive fields, wherein convolutional neural networks are a class of feed-forward artificial neural networks. Reinforcement learning is unstable or divergent when a nonlinear function approximator such as a neural network is used to represent Q. This instability comes from the correlations present in the sequence of observations, the fact that small updates to Q may significantly change the policy and the data distribution, and the correlations between Q and the target values.

Said artificial neural networks are computing systems vaguely inspired by the biological neural networks that constitute animal brains. Such systems "learn" to perform tasks by considering examples, generally without being programmed with any task-specific rules. For example, in image recognition, they might learn to identify images that contain cats by analyzing example images that have been manually labeled as "cat" or "no cat" and using the results to identify cats in other images. They do this without any prior knowledge about cats, e.g., that they have fur, tails, whiskers and cat-like faces. Instead, they automatically generate identifying characteristics from the learning material that they process.

An artificial neural network is based on a collection of connected units or nodes called artificial neurons which loosely model the neurons in a biological brain. Each connection, like the synapses in a biological brain, can transmit a signal from one artificial neuron to another. An artificial neuron that receives a signal can process it and then signal additional artificial neurons connected to it.

In common artificial neural network implementations, the signal at a connection between artificial neurons is a real number, and the output of each artificial neuron is computed by some non-linear function of the sum of its inputs. The connections between artificial neurons are called "synapses". Artificial neurons and synapses typically have a weight that adjusts as learning proceeds. The weight increases or decreases the strength of the signal at a connection. Artificial neurons may have a threshold such that the signal is only sent if the aggregate signal crosses that threshold. Typically, artificial neurons are aggregated into layers. Different layers may perform different kinds of transformations on their inputs. Signals travel from the first layer (the input layer), to the last layer (the output layer), possibly after traversing the layers multiple times.

The original goal of the artificial neural network approach was to solve problems in the same way that a human brain would. However, over time, attention moved to performing specific tasks, leading to deviations from biology. Artificial neural networks have been used on a variety of tasks, including computer vision, speech recognition, machine translation, social network filtering, playing board and video games and medical diagnosis.

Said artificial intelligence unit comprises a pooling unit, configured to transform input states of a variable number of other road users in the environment of the automated vehicle into one output state, and a knowledge configuration.

The knowledge configuration is for example a Q-table (if said artificial intelligence unit is a Q-learning unit) or synaptic weights (if said artificial intelligence unit is a Deep Q-learning unit).

Said artificial intelligence unit determines an evaluation value for at least two motion actions for the automated vehicle considering the output state and considering the knowledge configuration.

The at least two motion actions are in particular motion actions regarding longitudinal and/or lateral motion of the automated vehicle, for example acceleration, deceleration, turn left, turn right, switch lane to the left, stay in lane, or switch lane to the right.

Moreover, said artificial intelligence unit is configured to select one of the motion actions considering the evaluation value of the respective motion actions.

Said system is for example configured to select one of the motion actions by selecting the motion action providing the highest reward.

In particular, the automated vehicle or a driving system/driver assistance system of the automated vehicle may also execute the selected motion. The execution of the selected motion may be performed in the physical world or in a virtual simulation environment.

In a preferred embodiment of the invention said artificial intelligence unit comprises a transformer unit, with said transformer unit configured to transform a first representation of an input state into a second representation of an input state.

In particular, the transformer unit is an artificial neural network.

In another preferred embodiment of the invention, the input state of an other road user is at least one of the following:
- distance between the other road user and the automated vehicle,
- velocity of the other road user,
- lane of the other road user.

In addition or alternatively the input state of an other road user comprises at least one spatial, dynamic and/or kinematic property of the other road user.

In particular, when the transformer unit is an artificial neural network, the transformer unit is configured to transform the at least one spatial, dynamic and/or kinematic property of the other road user into another representation.

In another preferred embodiment of the invention said pooling unit is configured to transform input states of a first number of other road users into one output state in a first time step, transform input states of a second number of other road users into one output state in a second time step, with the first number of other road users differing from the second number of other road users.

This is possible, because the said pooling unit transforms the input states of other road users into exactly one output state. Therefore, said pooling unit is independent of the number of input states of other road users. So the number of input states of other road users can differ between various time steps.

In another preferred embodiment of the invention said pooling unit is configured to transform the input states of the variable number of other road users permutation invariantly into one output state.

Permutation invariance is the property that a result of a function does not depend on the order in which the function processes its inputs. For example, a function f(x,y,z) is permutation invariant, if the following equation is valid:
f(x,y,z) = f(x,z,y) = f(y,x,z) = f(y,z,x) = f (z,x,y) = f(z,y,x)

In another preferred embodiment of the invention said pooling unit is configured to transform the input states of the variable number of other road users permutation invariantly into one output state by determining a sum, a maximum or a minimum of the input states. The functions for determining a sum, a maximum and a minimum are permutation invariant.

In another preferred embodiment of the invention said pooling unit is an artificial neural network, with said artificial neural network in particular comprising a long short-term memory.

In another preferred embodiment of the invention, the artificial intelligence unit is a neural network. Said neural network comprises a plurality of neurons interconnected via a plurality of synapses.

A first set of neurons is receiving information about the output state, and a second set of neurons is approximating at least two evaluation functions considering the output state, and a third set of neurons is assigning the at least two evaluation functions to the at least two motion actions of the automated vehicle.

The approximation of the at least two evaluation functions is in particular based on the structure of the neural network, wherein the structure of the neural network defines which neurons are connected by the synapses. Additionally, the approximation of the at least two evaluation functions is in particular based on the synaptic weights, which define the influence of a first neuron on a second neuron.

The knowledge configuration of the neural network as the artificial intelligence unit is the synaptic weight of the at least one synapse of the second set of synapses.

Said neural network comprises synaptic weights of the at least one synapse of the second set of synapses. Said neural network determines an evaluation value for at least two motion actions for the automated vehicle considering the output state and considering the synaptic weights of the at least one synapse of the second set of synapses.

Moreover, said system is configured to select one of the motion actions considering the evaluation value of the respective motion actions.

In another preferred embodiment of the invention, the evaluation value of the at least two motion actions considers a deviation of an actual speed of the automated vehicle from a target speed of the automated vehicle.

In particular when the motion actions are lane changes of the automated vehicle, a deviation of the actual speed of the automated vehicle from the target speed of the automated vehicle may be a reason for performing lane changes at all.

A second aspect of the invention describes a system for training the artificial intelligence unit.

Said system is configured to deliver input states of at least two other road users to the artificial intelligence unit and train the artificial intelligence unit by adapting the knowledge configuration of the artificial intelligence unit considering the selected motion action.

For a better understanding of the present invention, and to show how the same may be carried into effect, reference will now be made, by way of example, to the accompanying drawing, in which:
- Fig. 1: shows an exemplified traffic situation,
- Fig. 2: shows the basic principle of reinforcement learning,
- Fig. 3: shows an exemplified structure of the artificial intelligence unit, and
- Fig. 4: shows an example for the knowledge configuration of the artificial intelligence unit.

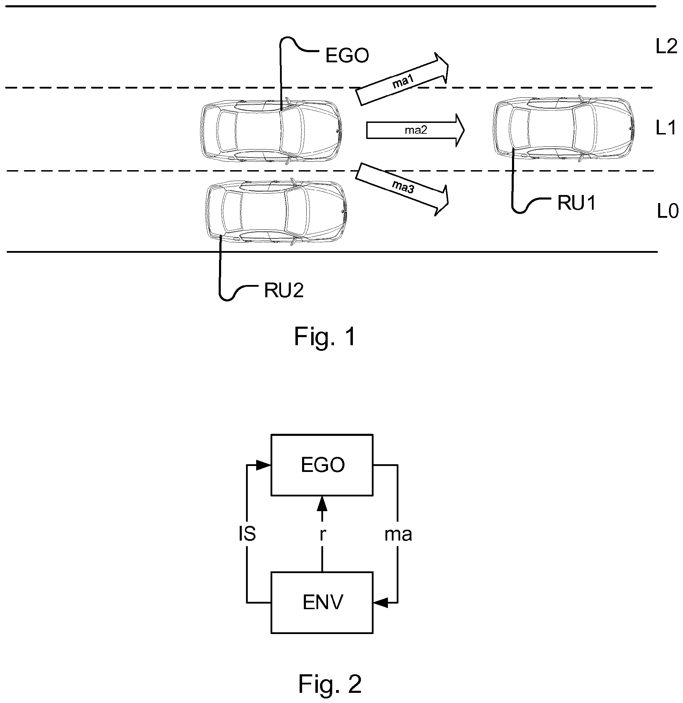

Fig. 1 show an exemplified traffic situation on a road that comprises three lanes L0, L1, L2. The automated vehicle EGO is driving on the middle lane L1, one road user RU1 is also driving on the middle lane L1 but in front of the automated vehicle EGO, and another road user RU2 is driving on the right lane L0.

The automated vehicle EGO has three motion actions ma1, ma2, ma3 available, wherein one motion action ma1 is a lane change to the left lane L2, one motion action ma2 is staying in the current lane L1 and one motion action ma3 is a lane change to the right lane L0.

Fig. 2 shows the basic principle of reinforcement learning. The automated vehicle EGO is selecting and executing a motion action ma, which influences the environment ENV of the automated vehicle. The automated vehicle EGO receives an input state IS characterizing the automated vehicle EGO and/or its environment ENV and a reward r for the transition from one state to another state.

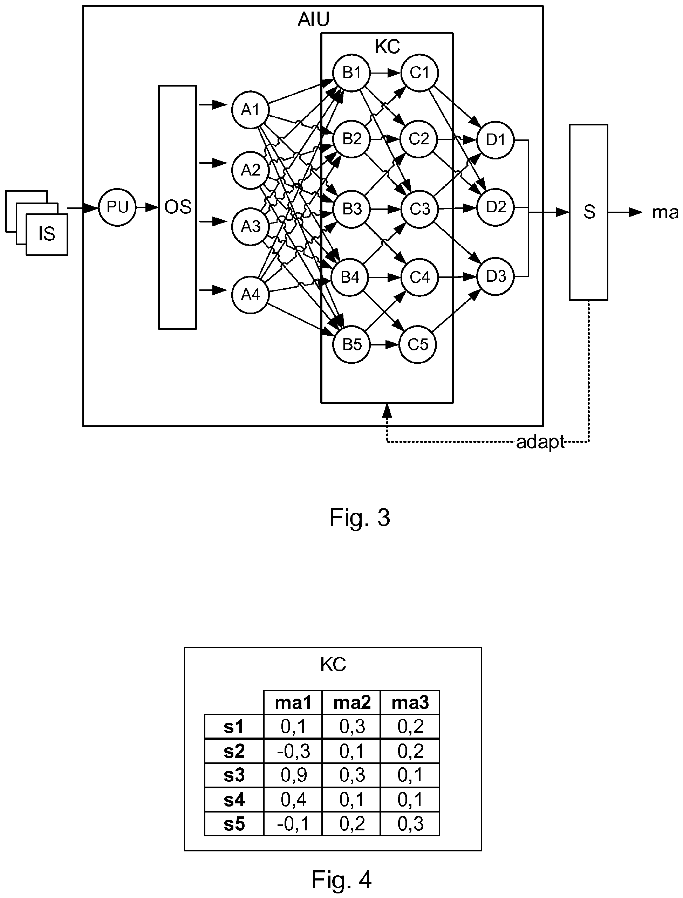

Fig. 3 shows an exemplified structure of the system for training the artificial intelligence unit AIU for an automated vehicle EGO.

Said artificial intelligence unit AIU comprises a knowledge configuration KC, and said artificial intelligence unit AIU determines an evaluation value for at least two motion actions ma1, ma2, ma3 for the automated vehicle EGO considering an output state OS and considering the knowledge configuration KC, wherein said output state OS is determined by a pooling unit PU, configured to transform input states IS of a variable number of other road users RU1, RU2 in the environment of the automated vehicle EGO into one output state OS. The respective input states IS of the variable number of other road users RU1, RU2 characterize the respective other road users RU1, RU2.

Said pooling unit PU is in particular configured to transform the input states IS of the variable number of other road users RU1, RU2 permutation invariantly into one output state OS by determining a sum, a maximum or a minimum of the input states IS.

Said artificial intelligence unit AIU is configured to select one of the motion actions ma1, ma2, ma3, considering the evaluation value of the respective motion actions ma1, ma2, ma3.

Said system comprises for example a selection unit S for selecting one of the motion actions ma1, ma2, ma3, considering the evaluation value of the respective motion actions ma1, ma2, ma3.

Additionally, said system is configured to train the artificial intelligence unit AIU by adapting the knowledge configuration KC of the artificial intelligence unit AIU considering the selected motion action ma.

In particular, the artificial intelligence unit AIU is a neural network. Said neural network AIU comprises a plurality of neurons A1 - A4; B1 - B5; C1 - C5; D1 - D3 interconnected via a plurality of synapses. A first set of neurons A1 - A4 is receiving information about the input state IS, s1 - s5, and a second set of neurons B1 - B5; C1 - C5 is approximating at least two evaluation functions considering the input state IS, s1 - s5. A third set of neurons D1 - D3 is assigning the at least two evaluation functions to the at least two motion actions ma1, ma2, ma3 of the automated vehicle.

The knowledge configuration KC of the artificial intelligence unit AIU is the synaptic weight of the at least one synapse of the second set of synapses.

Fig. 4 shows an example for the knowledge configuration KC of the artificial intelligence unit AIU.

In this example, for each of the output states OS, s1 - s5, a reward r for every motion action ma1, ma2, ma3 for the automated vehicle EGO is defined in the knowledge configuration KC, which is represented as a table.

Said artificial intelligence unit AIU reads out the reward r as an evaluation value for at least two motion actions ma1, ma2, ma3 for the automated vehicle EGO considering the output state OS, s1 - s5 from the knowledge configuration KC. Said output state OS, s1 - s5 characterizes the automated vehicle EGO and/or its environment ENV.

Moreover, said artificial intelligence unit AIU is configured to select one motion action ma from the set of motion actions ma1, ma2, ma3, considering the evaluation value of the respective motion actions ma1, ma2, ma3. For example, the motion action ma with the highest reward r may be selected. In this example, the selected motion action ma is motion action ma3, because it has the highest reward r of the at least two motion actions ma1, ma2, ma3 considering the current input state s2.

Additionally, said artificial intelligence unit AIU is configured to train the artificial intelligence unit AIU by adapting the knowledge configuration KC of the artificial intelligence unit AIU considering the selected motion action ma. In particular, the adaption of the knowledge configuration KC of the artificial intelligence unit AIU considering the selected motion action ma may be performed by determination of the following output state OS, s1 - s5, in particular the following input state s4. The reward r for the selected motion action ma, ma3 and the current input state s2 may be adapted, for example, by considering the reward r of the one motion action of the at least two motion actions ma1, ma2, ma3, which has the highest reward regarding the following input state s4. In this example, the motion action ma1 has the highest reward r of the at least two motion actions ma1, ma2, ma3 considering the following input state s4.

For example, the reward r for the selected motion action ma, ma3 and the current input state s2 may be set to a weighted sum of the old value of the reward r for the selected motion action ma, ma3 and the of the reward r for the motion action ma1 with the highest reward r of the at least two motion actions ma1, ma2, ma3 considering the following input state s4. The weights of the weighted sum specifies a learning rate or step size, which determines to what extent newly acquired information overrides old information. A factor of 0 makes the artificial intelligence unit AIU learn nothing (exclusively exploiting prior knowledge), while a factor of 1 makes the artificial intelligence unit AIU consider only the most recent information (ignoring prior knowledge to explore possibilities).

## Claims

1. Artificial intelligence unit (AIU) for an automated vehicle (EGO), with
• said artificial intelligence unit (AIU) comprising
• a pooling unit (PU), configured to transform input states (IS) of a variable number of other road users (RU1, RU2) in the environment of the automated vehicle (EGO) into one output state (OS),
• a knowledge configuration (KC),
• said artificial intelligence unit (AIU) configured to
• determine an evaluation value for at least two motion actions (ma1, ma2, ma3) for the automated vehicle (EGO) considering the output state (OS) and considering the knowledge configuration (KC),
• select one of the motion actions (ma) considering the evaluation value of the respective motion actions (ma1, ma2, ma3).

2. Artificial intelligence unit (AIU) according to claim 1, said artificial intelligence unit (AIU) comprising a transformer unit, with said transformer unit configured to transform a first representation of an input state (IS) into a second representation of an input state (IS).

3. Artificial intelligence unit (AIU) according to one of the previous claims, wherein the input state (IS) of an other road user (RU1, RU2) is at least one of the following:
• distance between the other road user (RU1, RU2) and the automated vehicle (EGO),
• velocity of the other road user (RU1, RU2),
• lane of the other road user (RU1, RU2).

4. Artificial intelligence unit (AIU) according to one of the previous claims, with said pooling unit (PU) configured to
• transform input states (IS) of a first number of other road users (RU1, RU2) into one output state (OS) in a first time step,
• transform input states (IS) of a second number of other road users (RU1, RU2) into one output state (OS) in a second time step,
• with the first number of other road users (RU1, RU2) differing from the second number of other road users (RU1, RU2).

5. Artificial intelligence unit (AIU) according to one of the previous claims, with said pooling unit (PU) configured to transform the input states (IS) of the variable number of other road users (RU1, RU2) permutation invariantly into one output state (OS).

6. Artificial intelligence unit (AIU) according to claim 5, with said pooling unit (PU) configured to transform the input states (IS) of the variable number of other road users (RU1, RU2) permutation invariantly into one output state (OS) by determining a sum, a maximum or a minimum of the input states (IS).

7. Artificial intelligence unit (AIU) according to claim 5, wherein said pooling unit (PU) is an artificial neural network, with said artificial neural network in particular comprising a long short-term memory.

8. Artificial intelligence unit (AIU) according to any of the previous claims, wherein
• the artificial intelligence unit (AIU) is a neural network,
• said neural network (AIU) comprising a plurality of neurons (A1 - A4; B1 - B5; C1 - C5; D1 - D3) interconnected via a plurality of synapses, wherein a first set of neurons (A1 - A4) is receiving information about the output state (OS), and wherein a second set of neurons (B1 - B5; C1 - C5) is approximating at least two evaluation functions considering the output state (OS), and wherein a third set of neurons (D1 - D3) is assigning the at least two evaluation functions to the at least two motion actions (ma1, ma2, ma3) of the automated vehicle (EGO), and
• the knowledge configuration (KC) of the artificial intelligence unit (AIU) is the synaptic weight of the at least one synapse of the second set of synapses.

9. A system according to any of the previous claims, with the evaluation value of the at least two motion actions (ma1, ma2, ma3) considering a deviation of an actual speed of the automated vehicle (EGO) from a target speed of the automated vehicle (EGO).

10. A system for training the artificial intelligence unit (AIU) according to one of the previous claims, said system configured to
• deliver input states (IS) of at least two other road users (RU1, RU2) to the artificial intelligence unit (AIU), and
• train the artificial intelligence unit (AIU) by adapting the knowledge configuration (KC) of the artificial intelligence unit (AIU) considering the selected motion action (ma).
